# EUROPEAN PATENT SPECIFICATION

(11) **EP 1 340 209 B1**
(45) Date of publication and mention of the grant of the patent: **17.03.2010**
(21) Application number: 01982493.7
(22) Date of filing: 15.11.2001
(51) Int. Cl.: G08C 19/28

(54) **ARRANGEMENT INCLUDING A REMOTE CONTROL DEVICE AND A FIRST ELECTRONIC DEVICE**
EINRICHTUNG MIT EINER FERNBEDIENUNGSVORRICHTUNG UND EINEM ERSTEN GERÄT
EQUIPEMENT COMPRENANT UN DISPOSITIF DE TELECOMMANDE ET UN PREMIER DISPOSITIF ELECTRONIQUE

(30) Priority: 23.11.2000 EP 00204165
(43) Date of publication of application: 03.09.2003
(73) Proprietor: Koninklijke Philips Electronics N.V., 5621 BA Eindhoven (NL)
(72) Inventor: DE BOLSTER, Ann, NL-5656 AA Eindhoven (NL); LAMBRECHTS, Marc, E., C., NL-5656 AA Eindhoven (NL); WOUTERS, Johan, A., E., NL-5656 AA Eindhoven (NL)
(74) Representative: Deguelle, Wilhelmus H. G.
(86) International application number: PCT/EP2001/013327
(87) International publication number: WO 2002/043024

(56) References cited:
- EP-A- 1 039 772
- WO-A-99/50807
- JP-A- 2000 156 893
- US-A- 6 104 334

## Description

The invention relates to an arrangement including a remote control device, a first electronic device, and a further electronic device, said remote control device having a first memory for storing a set of code data for controlling the further electronic device, which first memory is connected to a signal generator to supply said code data to said signal generator, which signal generator is adapted to generate, on the basis of said code data, control signals for controlling said further electronic device, and to transmit said control signals to said further electronic device, said first electronic device having a data input arranged to receive data from said remote control device.

Such arrangements are generally known from audio and video apparatuses. In the known arrangements the remote control device has a first memory which is loaded with code data retrieved from, for example, a smart card. Once the code data has been retrieved from the smart card and loaded into the first memory the smart card may be disposed of. To control the further electronic device the user presses or touches a key of the remote control device, which causes the code data assigned to the selected key to be retrieved from the first memory. The retrieved code data is supplied to the signal generator, which generates a control signal based on the retrieved code data. The generated signal is then transmitted to the electronic device to control the latter.

A drawback of the known arrangement is that the generation of a backup of the code data is rather laborious. A user who wishes to generate a backup version of the code data is obliged to retrieve them one by one from the first memory by each time pressing or touching the assigned key. Such an operation is time-consuming and there is a fair chance that the user will omit to press certain keys, which results in an incomplete backup. Moreover, it is the control signal and not the code data as such that is transmitted. Another backup method is further known from document JP 2000 156893 (Matsushita Elec.) filed on 06 March 1998 which describes the backup of setting information.

It is an object of the present invention to provide a more user-friendly way of generating a backup version of the code data.

An arrangement according to the invention is characterized in that said remote control device has a code data output unit connected to said first memory, said code data output unit further receiving an upload signal and being adapted to read, under control of said upload signal, at least a subset of said set of code data from said memory, said code data output unit being further adapted to transmit said subset burstwise to said data input unit of said first electronic device, which first electronic device includes a second memory for storing a received subset. By including a code data output unit in the remote control device and a second memory in the first electronic device, the code data as such can be retrieved from the first memory and transmitted to the second memory as code data in order to be stored in this second memory. In this way at least a back-up subset of the code data is available not only in the first memory but also in the second memory, which belongs to the first electronic device. Thus, so when the code data in the remote control device is lost, for example due to a battery failure, the code data can be downloaded from the second memory and there is no need to buy a new smart card. Moreover, by sending the code data subset burstwise to the first electronic device, it is no longer necessary to send and retrieve them by pressing one key after the other on the remote control device.

Furthermore, said signal generator is adapted to generate said control signal in accordance with a predetermined transmission protocol, said code data output unit being adapted to include an identifier, which identifies said transmission protocol, into said subset. When a universal remote control device is used, the identifier makes it possible to add the protocol to the code data and to furnish the protocol upon loading of a subset retrieved from the second memory.

A first preferred embodiment of an arrangement according to the invention is characterized in that said signal generator is connected to said code data output unit, which is adapted to generate a control signal after reading of said subset and to transmit said control signal and said subset to said signal generator, said signal generator being adapted to generate a code data signal, which includes said subset, upon receipt of said control signal and to transmit said code data signal to said data input unit of the first electronic device, which first electronic device includes a signal decoder adapted to retrieve said subset from a received code data signal. In this way, the transmission of the subset to the second memory is effected by means of the signal generator without the transmission of the control signals or the operation of the further electronic device being affected.

A second preferred embodiment of an arrangement according to the invention is characterized in that said first electronic device includes a verification unit connected to said data input unit, said verification unit being adapted to compare a received subset with subsets stored in said second memory and to generate a first flag if said received subset is not stored in said second memory. The presence of a verification unit makes it possible to verify whether the newly supplied subset has already been received by the first electronic device.

A third preferred embodiment of an arrangement according to the invention is characterized in that said verification unit is adapted to generate a second flag if said received subset is already stored in said second memory, said verification unit being further adapted to inhibit, under control of said second flag, the storage of said received subset in said second memory. Thus, it is achieved that only subset which are not yet stored in the second memory will be stored.

The invention also relates to the remote control device forming part of said arrangement.

Preferably, said remote control device is a user-configurable remote control device. Since user-configurable remote control devices have volatile memories, the present invention offers a suitable solution to load or update them directly from the first electronic device without use of a smart card.

The invention will now be described in more detail with reference to the drawings, which show a preferred embodiment of a communication system according to the invention. In the drawings:
Figures 1 and 2 illustrate schematically an arrangement according to the invention;
Figures 3 and 4 illustrate schematically an electronic circuit of the remote control device and of the first electronic device, respectively;
Figure 5 shows a flow chart illustrating the operation of the remote control device when code data is to be transmitted; and
Figure 6 shows a flow chart illustrating the operation of the first electronic device upon receipt of a code data signal.

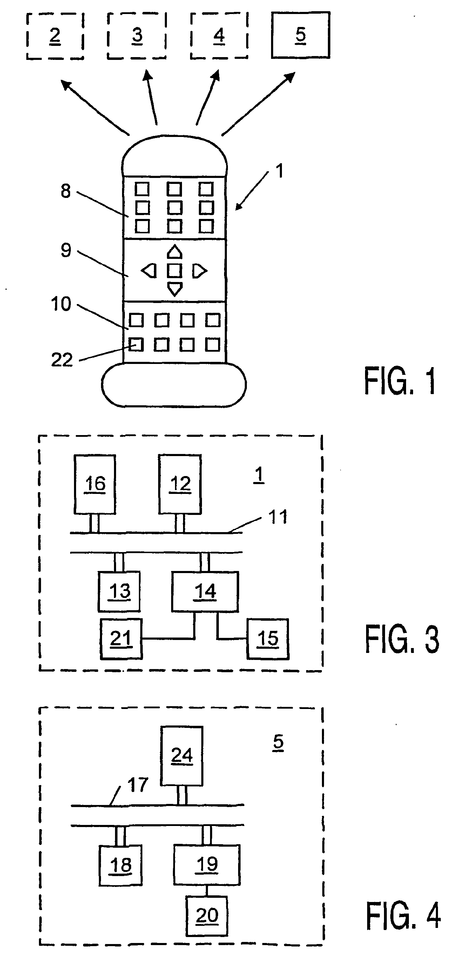

In the drawings the same or similar elements bear the same reference signs. The arrangement illustrated in Figure 1 comprises a remote control device 1 and at least one further electronic device 2, 3, 4 and 5. The number of electronic devices shown in Figure 1 is of course arbitrary and the arrangement may include more or less devices than the four illustrated. The devices are formed by, for example, a television receiver 2, a video recorder 3, an audio amplifier 4, the first electronic device 5 being, for example, a set-top box. The remote control is adapted to send control signals to the electronic devices 2, 3 and 4 and to communicate with the first electronic device 5.

The remote control device 1 has several command keys 8, 9 and 10, which are either formed by resilient push buttons or by soft keys, displayed on a display screen. Activation of one of the keys initiates the generation of a control signal, which is transmitted to the relevant device in order to control this device.

The remote control device may be a user-configurable remote control device which can be loaded either by a smart card or by other means, such as direct connection to a database. However, it will be evident that the present invention is not limited to a user-configurable remote control device.

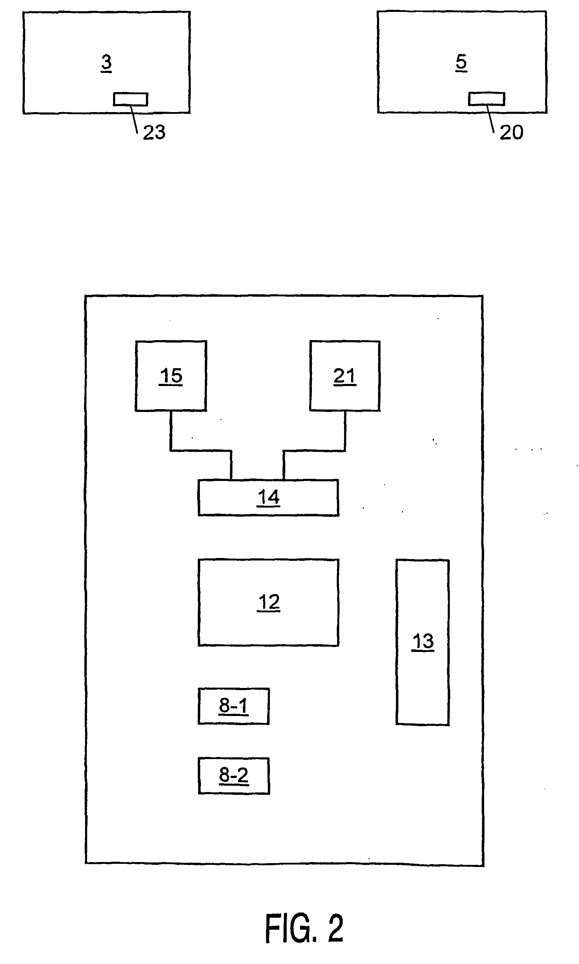

As illustrated in Figure 2, the first electronic device 5 has a data input unit 20 arranged to receive data from the remote control device. The further device 3 has a control signal input 23 for receiving control signals from the remote control device. For this purpose the remote control device 1 includes a transmitter 15. The remote control device further includes a code data output unit 21 and a first memory 13 connected to a data processing unit 12.

Figure 3 is a block diagram which schematically, shows the electronic circuit of the remote control device 1. The latter has a communication bus 11, to which the data processing unit 12, for example a microprocessor, is connected. The first memory 13 and a key module 16 as well as an interface 14 are also connected to the bus 11. The key module 16 forms the interface between the command keys 8, 9 and 10 and the processing unit 12 and converts the actuation of a key into an instruction to be processed by the data processing unit. The first memory 13 serves for storing a set of code data for controlling at least one further electronic device (2, 3, 4). The interface 14 is further connected to a second communication unit 15, preferably an infrared transmitter, for transmitting signals to the electronic devices, and to the code data output unit 21.

Upon activation of one of the keys by a user, for example a key 8-1 "Volume up", the key module 16 transmits an instruction identifying the activated key to the data processing unit. On the basis of this instruction the data processing unit generates an address in order to address the first memory 13 and read out the code data assigned to the activated key. The code data thus read is then transferred to the interface 14, which includes a signal generator adapted to generate, on the basis of the supplied code data, a control signal for controlling one of the further electronic devices. The control signal is sent to the further electronic device by means of the transmitter 15.

Each of the further electronic devices is adapted to detect a control signal emitted by the remote control device. The control signal is therefore usually modulated on a carrier wave in accordance with a predetermined transmission protocol, to which the electronic device is responsive. The signal generator modulates the code data on the carrier wave depending on the electronic device for which the signal is intended. The signal is also modulated in accordance with the protocol of the addressed electronic device. If the remote control device is a user-configurable universal remote control device, it is necessary to supply the necessary data, including the transmission protocol and the carrier wave frequency to the signal generator, in order to generate a control signal that can be received and decoded by the addressed electronic device. Therefore, it is important to store not only the code data assigned to each of the keys, for example to increase the sound volume of the television receiver, but also the carrier frequency and the modulation protocol. Instead of by means of a carrier frequency, the control signal could be formed by means of a series of pulses, wherein either the number or the length of the pulses determines the contents of the control signal.

Figure 4 is a block diagram which schematically shows the electronic circuit of the first electronic device 5. The first electronic device has a communication bus 17, to which a data processing unit 24 and a second memory 18 are connected. An interface 19 is also connected to bus 17. The data input 20 is connected to the interface 19. This data input 20 serves to receive code data from the remote control device 1. It should be noted that the first electronic device may also be formed by a conventional PC in connection with the Internet or by a television or audio receiver connected to a Cable Antenna TV system (CATV). In the latter cases, the second memory 18 is formed by the RAM of the PC or by a buffer capable of storing, at least temporarily, data downloaded from the Internet or from the CATV supplier. It is not necessary that the data input 20 and the second memory are physically connected to the same bus 17. They could be remote from each other. However, it is important that they can communicate with each other.

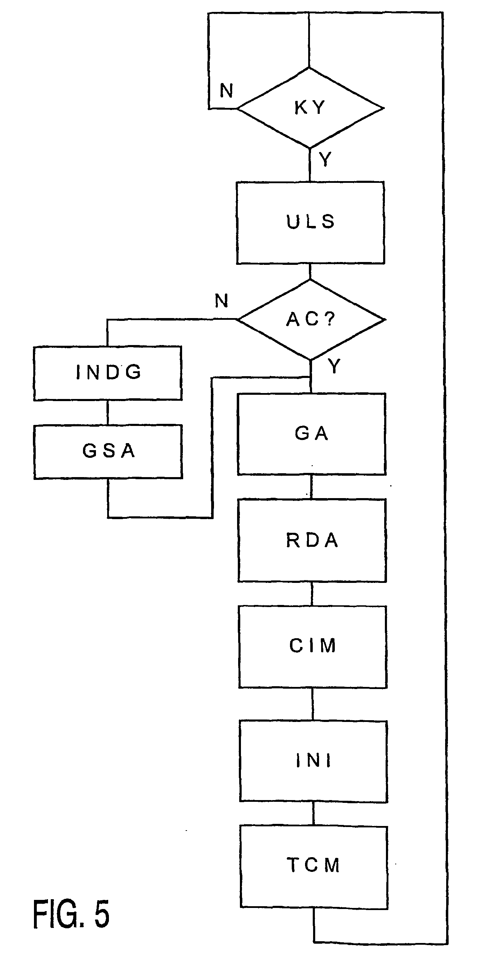

The second memory 18 of the first electronic device 5 serves for storing code data originating from the first memory 13 of the remote control 1. In order to transfer the code data assigned to each of the command keys, the remote control device should be switched to an upload mode. For this purpose, the user presses, for example, a key 22 on the remote control device 1. Alternatively, the user may press another key, for example the volume up key, twice or three times or press two keys successively depending on how the remote control device is constructed. By pressing (KY) the appropriate key or keys an upload signal is generated (ULS) as illustrated schematically in the flow chart shown in Figure 5. The different instructions illustrated in this flow chart are executed under control of the data processing unit 12.

The upload signal is supplied to the code data output unit 21 in order to activate the latter, and the data processing unit requests (AC) the user if all the code data should be read from the first memory. This is realized for example by displaying a message on a display of the remote control device, or by making keys light up. When the user indicates that not all the code data but only a subset of the code data set (AC:N) should be selected, the data processing unit requests the user (IND G) to indicate which second subset should be selected. Thus the user may request, for example, that only the code data for controlling the VCR be selected. The user then indicates (GSA) which subset should be selected, for example by pressing the key associated with the selected device.

Once the user has indicated which code data should be selected, the code data output unit receives the user's instructions, i.e. either all code data or only a selected subset, and starts to generate (GA) the addresses of the first memory locations where the selected code data are stored. The generated addresses are then supplied to the first memory in order to read and retrieve (RDA) the code data stored at the addressed memory locations.

Depending on the configuration of remote control device and the first electronic device the read code data is then configured into a transmittable message (CTM). For example, in the case that the remote control device and the first electronic device can be connected by means of a wire, the code data is digitally transferred in a manner similar to that in which data is transmitted in a computer network. If, on the other hand, the code data is transmitted by means of an infra-red or ultrasonic signal, the code data is modulated as a series of pulses. However, these pulses differ from those used to transfer a control signal, in order to not disturb the operation of the other electronic devices. The signal generator could be used for transmitting the code data. However, the signal generator is then switched to a mode suitable to transmit such code, for example, by means of a control signal generated by the code data output unit.

If the signal generator is adapted to generate control signals in accordance with a predetermined transmission protocol, for example RC 5 for Philips devices, this protocol may also be included in the data transmitted to the first electronic device. In the latter case the code data output unit is adapted to generate an identifier, which identifies this protocol, and to include (INI) this identifier into the second subset of code data to be transmitted. This is in particular the case if a learning or user-configurable remote control device is used and used to control several electronic devices from different manufacturers. For each electronic device the transmission protocol has to be identified and entered into the learning remote control device.

Once the message includes the code data, with or without the identifier, this code data signal is transmitted (TCM) to the first electronic device.

The code data is transmitted burstwise to the first electronic device either as a batch including all the code data to be transferred or as a series of successive signals. Once the code data, with or without the identifier, are received by the first electronic unit, said data can be stored in the second memory 18. If the data input is used to receive the code data signal, the data input is preferably received from a signal decoder adapted to retrieve the subset and the identifier, if present, from the received code data signal. The retrieved code data is then stored in the second memory at successive addresses generated by an address generator of the first electronic device.

The first electronic device preferably includes a verification unit which is part of the data processing unit 24. The verification unit is adapted to compare received code data with the code date stored in the second memory, in order to avoid that the same code data are stored twice. For this purpose, the verification unit is connected to the second memory and to the interface 19, where the code data signal is input.

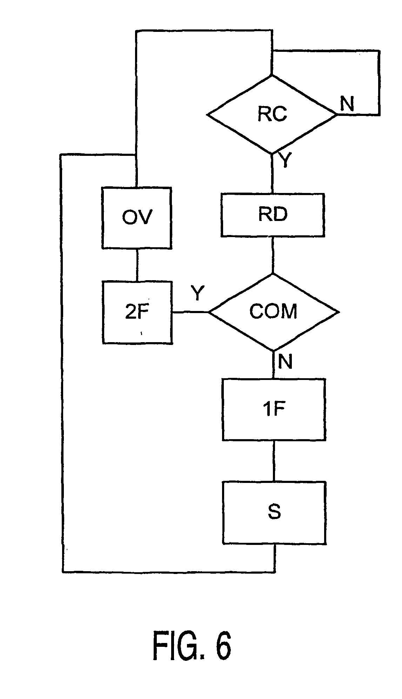

Upon receipt (RC, see Figure 6) of a code data signal by the interface, the verification unit reads (RD) the stored code data and compares (COM) the received code data with the code data stored in the second memory. If the received code data is already present or is not yet present in the second memory, the verification unit generates a second (2F) or a first (1F) flag, respectively. Under control of the first flag the received code data is stored (S) in the second memory, whereas under control of the second flag the received code data ism ignored (OV) and access to the second memory is inhibited.

If the verification unit detects that the code data is already present, it may also verify whether the received code data is an updated version of the stored code data and, if this is the case, replace the stored code data with the updated code data. Thus, the contents of the second memory can be kept up-to-date. A user who reloads his first memory will then always have an updated contents.

The present invention provides not only a possibility to load or reload the first memory but, if the code data are available from a common source such as a CATV provider or an Internet provider, also a possibility to complete or update the first memory of his remote control device.

When the user now needs to update his remote control device or to reload the first memory of his remote control device, for example because the contents has been lost due to a battery failure, he can download the code data from the second memory. For this purpose, the user activates his remote control by pressing a call key associated with the first electronic device. This causes a calling signal to be generated and transmitted to the first electronic device. Upon receipt of such a calling signal, the first electronic device will start to address the second memory or download the code data from the second memory. Depending on the configuration of the remote control device, different code data will then be transmitted to the remote control device, where they can be stored in the first memory. This is effected either by means of the transmitters/receivers 15 and 20 or the wired connection, if available.

## Claims

1. A remote control device (1), said remote control device having a first memory (13) for storing a set of code data for controlling a first electronic device (5) and a further electronic device (2, 3, 4, or 5), which first memory is connected to a signal generator (14) to supply said code data to said signal generator, which signal generator is adapted to generate, on a basis of said code data, control signals for controlling said further electronic device (2, 3, 4, or 5), and to transmit said control signals to said further electronic device, said remote control device being configured to transmit data to the first electronic device, wherein said remote control device has a code data output unit (21) connected to said first memory, said code data output unit further arranged for receiving an upload signal and being adapted to read, under control of said upload signal, at least a subset of said set of code data from said first memory, **characterized in that** said code data output unit is further adapted to transmit said subset burstwise to a data input unit (20) of the first electronic device which includes a second memory (18) for storing a received subset, and **in that** said signal generator (14) is adapted to generate said control signal in accordance with a predetermined transmission protocol, said code data output unit being adapted to include an identifier, which identifies said transmission protocol, into said subset.

2. An arrangement including the remote control device (1) of claim 1, and further comprising the first electronic device (5), and the further electronic device (2, 3, 4, or 5), said first electronic device having a data input unit arranged to receive data from said remote control device.

3. An arrangement as claimed in claim 2, **characterized in that** said signal generator (14) is connected to said code data output unit (21), which is adapted to generate a control signal after reading of said subset and to transmit said control signal and said subset to said signal generator, said signal generator being adapted to generate a code data signal, which includes said subset, upon receipt of said control signal and to transmit said code data signal to said data input unit (20) of the first electronic device (5), which first electronic device includes a signal decoder adapted to retrieve said subset from a received code data signal.

4. An arrangement as claimed in claim 2 or 3, **characterized in that** said first electronic device (5) includes a verification unit connected to said second memory (18) and said data input unit (20), said verification unit being adapted to compare a received subset with subsets stored in said second memory and to generate a first flag if said received subset is not stored in said second memory.

5. An arrangement as claimed in claim 4, **characterized in that** said verification unit is adapted to generate a second flag if said received subset is already stored in said second memory (18), said verification unit being further adapted to inhibit, under control of said second flag, the storage of said received subset in said second memory.

6. An arrangement as claimed in any one of the claims 2 to 5, **characterized in that** the first (5) and the further electronic device (2, 3, 4, or 5) are the same.

7. The remote control device as claimed in claim 1, **characterized in that** it is a user-configurable remote control.

## Patentansprüche

1. Fernbedienungsvorrichtung (1), wobei die Fernbedienungsvorrichtung einen ersten Speicher (13) aufweist, um zur Steuerung einer ersten elektronischen Einrichtung (5) und einer weiteren elektronischen Einrichtung (2, 3, 4 oder 5) einen ersten Codedatensatz zu speichern, wobei der erste Speicher mit einem Signalgeber (14) verbunden ist, um diesem die Codedaten zuzuführen, wobei der Signalgeber so eingerichtet ist, dass er aufgrund der Codedaten Steuersignale zur Steuerung der weiteren elektronischen Einrichtung (2, 3, 4 oder 5) erzeugt und die Steuersignale zu der weiteren elektronischen Einrichtung überträgt, wobei die Fernbedienungsvorrichtung so konfiguriert ist, dass sie Daten zu der ersten elektronischen Einrichtung überträgt, wobei die Fernbedienungsvorrichtung eine mit dem ersten Speicher verbundene Codedatenausgabeeinheit (21) aufweist, wobei die Codedatenausgabeeinheit weiterhin angeordnet ist, um ein Upload-Signal zu empfangen, und so eingerichtet ist, dass sie unter Steuerung des Upload-Signals zumindest eine Teilmenge des Codedatensatzes aus dem ersten Speicher ausliest, **dadurch gekennzeichnet, dass** die Codedatenausgabeeinheit weiterhin so eingerichtet ist, dass sie die Teilmenge burstartig zu einer Dateneingabeeinheit (20) der ersten elektronischen Einrichtung überträgt, die einen zweiten Speicher (18) zur Speicherung der empfangenen Teilmenge enthält, und dass der Signalgeber (14) so eingerichtet ist, dass er das Steuersignal gemäß einem vorgegebenen Übertragungsprotokoll erzeugt, wobei die Codedatenausgabeeinheit so eingerichtet ist, dass sie eine Kennung erzeugt, die das Übertragungsprotokoll identifiziert, und diese Kennung in die Teilmenge aufnimmt.

2. Anordnung mit der Fernbedienungsvorrichtung (1) nach Anspruch 1 sowie weiterhin mit der ersten elektronischen Einrichtung (5) und der weiteren elektronischen Einrichtung (2, 3, 4 oder 5), wobei die erste elektronische Einrichtung eine Dateneingabeeinheit aufweist, die angeordnet ist, um Daten von der Fernbedienungsvorrichtung zu empfangen.

3. Anordnung nach Anspruch 2, **dadurch gekennzeichnet, dass** der Signalgeber (14) mit der Codedatenausgabeeinheit (21) verbunden ist, die so eingerichtet ist, dass sie nach Lesen der Teilmenge ein Steuersignal erzeugt und dieses Steuersignal und die Teilmenge zu dem Signalgeber überträgt, wobei der Signalgeber so eingerichtet ist, dass er bei Empfang des Steuersignals ein Codedatensignal erzeugt, welches die Teilmenge enthält, und dieses Codedatensignal zu der Dateneingabeeinheit (20) der ersten elektronischen Einrichtung (5) überträgt, wobei die erste elektronische Einrichtung einen Signaldecoder enthält, der so eingerichtet ist, dass er die Teilmenge aus einem empfangenen Codedatensignal abruft.

4. Anordnung nach Anspruch 2 oder 3, **dadurch gekennzeichnet, dass** die erste elektronische Einrichtung (5) eine mit dem zweiten Speicher (18) und der Dateneingabeeinheit (20) verbundene Prüfeinheit enthält, wobei die Prüfeinheit so eingerichtet ist, dass sie eine empfangene Teilmenge mit in dem zweiten Speicher gespeicherten Teilmengen vergleicht und ein erstes Flag erzeugt, wenn die empfangene Teilmenge nicht in dem zweiten Speicher gespeichert ist.

5. Anordnung nach Anspruch 4, **dadurch gekennzeichnet, dass** die Prüfeinheit so eingerichtet ist, dass sie ein zweites Flag erzeugt, wenn die empfangene Teilmenge bereits in dem zweiten Speicher (18) gespeichert ist, wobei die Prüfeinheit weiterhin so eingerichtet ist, dass sie unter Steuerung des zweiten Flags die Speicherung der empfangenen Teilmenge in dem zweiten Speicher unterbindet.

6. Anordnung nach einem der Ansprüche 2 bis 5, **dadurch gekennzeichnet, dass** die erste (5) und die weitere elektronische Einrichtung (2, 3, 4 oder 5) gleich sind.

7. Fernbedienungsvorrichtung nach Anspruch 1, **dadurch gekennzeichnet, dass** diese eine vom Anwender konfigurierbare Fernbedienung ist.

## Revendications

1. Dispositif de commande à distance (1), ledit dispositif de commande à distance ayant une première mémoire (13) pour stocker un ensemble de données de code afin de commander un premier dispositif électronique (5) et un nouveau autre dispositif électronique (2, 3, 4 ou 5), laquelle première mémoire est connectée à un générateur de signaux (14) pour fournir lesdites données de code audit générateur de signaux, lequel générateur de signaux est adapté de manière à générer, sur une base desdites données de code, des signaux de commande pour commander ledit nouveau autre dispositif électronique (2, 3, 4 ou 5) et à transmettre lesdits signaux de commande audit nouveau autre dispositif électronique, ledit dispositif de commande à distance étant configuré de manière à transmettre des données au premier dispositif électronique, dans lequel ledit dispositif de commande à distance présente une unité de sortie de données de code (21) qui est connectée à ladite première mémoire, ladite unité de sortie de données de code étant en outre agencée de manière à recevoir un signal de téléchargement et étant adaptée de manière à lire, sous la commande dudit signal de téléchargement, au moins un sous-ensemble dudit ensemble de données de code à partir de ladite première mémoire, **caractérisé en ce que** ladite unité de sortie de données de code est en outre adaptée de manière à transmettre, en forme de rafale, ledit sous-ensemble à une unité d'entrée de données (20) du premier dispositif électronique qui comprend une deuxième mémoire (18) pour stocker un sous-ensemble reçu et **en ce que** ledit générateur de signaux (14) est adapté de manière à générer ledit signal de commande selon un protocole de transmission prédéterminé, ladite unité de sortie de données de code étant adaptée de manière à inclure dans ledit sous-ensemble un identificateur qui identifie ledit protocole de transmission.

2. Equipement comprenant le dispositif de commande à distance (1) selon la revendication 1, et comprenant en outre le premier dispositif électronique (5) et le nouveau autre dispositif électronique (2, 3, 4 ou 5), ledit premier dispositif électronique ayant une unité d'entrée de données qui est agencée de manière à recevoir des données en provenance dudit dispositif de commande à distance.

3. Equipement selon la revendication 2, **caractérisé en ce que** ledit générateur de signaux (14) est connecté à ladite unité de sortie de données de code (21) qui est adaptée de manière à générer un signal de commande après la lecture dudit sous-ensemble et à transmettre ledit signal de commande et ledit sous-ensemble audit générateur de signaux, ledit générateur de signaux étant adapté de manière à générer un signal de données de code, qui inclut ledit sous-ensemble, à la réception dudit signal de commande et à transmettre ledit signal de données de code à ladite unité d'entrée de données (20) du premier dispositif électronique (5), lequel premier dispositif électronique comprend un décodeur de signal qui est adapté de manière à récupérer ledit sous-ensemble à partir d'un signal de données de code reçu.

4. Equipement selon la revendication 2 ou selon la revendication 3, **caractérisé en ce que** ledit premier dispositif électronique (5) comprend une unité de vérification qui est connectée à ladite deuxième mémoire (18) et à ladite unité d'entrée de données (20), ladite unité de vérification étant adaptée de manière à comparer un sous-ensemble reçu à des sous-ensembles qui sont stockés dans ladite deuxième mémoire et à générer un premier drapeau si ledit sous-ensemble reçu n'est pas stocké dans ladite deuxième mémoire.

5. Equipement selon la revendication 4, **caractérisé en ce que** ladite unité de vérification est adaptée de manière à générer un deuxième drapeau si ledit sous-ensemble reçu a déjà été stocké dans la deuxième mémoire (18), ladite unité de vérification étant en outre adaptée de manière à empêcher, sous la commande dudit deuxième drapeau, le stockage dudit sous-ensemble reçu dans ladite deuxième mémoire.

6. Equipement selon l'une quelconque des revendications précédentes 2 à 5, **caractérisé en ce que** le premier (5) et le nouveau autre dispositif électronique (2, 3, 4 ou 5) sont les mêmes.

7. Dispositif de commande à distance selon la revendication 1, **caractérisé en ce qu'**il est un dispositif de commande à distance configurable par l'utilisateur.
